# EUROPEAN PATENT SPECIFICATION

(11) **EP 2 737 794 B1**
(45) Date of publication and mention of the grant of the patent: **22.06.2016**
(21) Application number: 13075073.0
(22) Date of filing: 08.11.2013
(51) Int. Cl.: A01K 13/00, A01L 15/00, A61D 11/00

(54) **Hoof spraymat**
Klauen-Spruhmatte
Tapis pulvérisateur pour sabots

(30) Priority: 12.11.2012 NL 1039890
(43) Date of publication of application: 04.06.2014
(73) Proprietor: Vink, Gerrit Jan, 6661 NG Elst (NL)
(72) Inventor: Vink, Gerrit Jan, 6661 NG Elst (NL)

(56) References cited:
- WO-A1-93/08764
- WO-A1-03/092747
- WO-A1-2009/029195
- US-B1- 6 463 885

## Description

The invention is a device for disinfecting cows' claws fully automatically. Cows which are kept in an open housing where the claws are constantly in contact with liquid and organic manure, experience claw problems more frequently. In order to treat and prevent diseases like Mortellaro, interdigital dermatitis (also known as scald) and sole ulcer, a so-called disinfecting tray is provided in the passageway inside the shed, usually in the exit from the milking shed. This large, shallow tray which cows step into contains a disinfecting solution. The disadvantages of using a disinfecting tray is the fact that cows' claws are usually covered in manure and dirt, which means claws only become moist so the disinfectant is not quite able to reach those places that actually need treatment. In addition, the tray is easily contaminated by transferred manure and dirt, and because cows defecate into the tray while walking through.
In addition to the disinfecting trays, disinfecting mats are also used on a regular basis. These absorbent mats are soaked with a disinfectant. Both the disinfecting tray and the disinfecting mat have quite the same results and disadvantages. A similar mat is known from patent US6463885.
Another alternative for cleaning and disinfecting cows' claws is to actually spray these directly. A device to this purpose is also referred to in the patent registers DE 29808877 and EP 1099373A1. This device, however, is complicated and expensive. It requires huge amounts of fluid as it is hardly directed. Also, it is difficult to install at the existing sheds and constitutes an obstacle to the cows, thus blocking the exit from the milking shed.

The purpose of the invention is to have a device that will eliminate most of the disadvantages mentioned above, which is easier and cheaper than the existing disinfecting alternatives, and which will help apply the disinfectant or medication more directly and effectively, thus using less of it.

The device according to the invention is designed as such that a jet of fluid that contains the disinfectant or medicine will only be released, provided it can actually touch the claw. In addition, this jet of fluid must only reach the claws, not the udders or nipples, to avoid irritation. The device should not hinder the movement of the cows.

According to the invention the device consists of a fluid-filled mat made from springy material, covered with hemispherical bulges protruding at regular intervals and which have been provided with a sprinkler that is activated once the cow steps on it, allowing the claw to be sprayed with the disinfectant. The mat is placed on the floor of the passageway, for instance in the exit from a milking shed or milking robot. Whenever a cow steps onto the mat its legs pushing the resilient bulge, a valve will open up. The fluid is forced out through the sprayer. The jet of fluid will reach the entire claw or part of it, applying the disinfectant or medicine onto the right place. Using a pressure reducing valve, the pressure and height can be set. This is important because the fluid must never touch the udder or nipples, to avoid irritation. With this system only new and clean fluid is used, but because this fluid is now applied more effectively and economically, less of it is required compared to the methods referred to above.

The invention is set out in detail below, using a model consisting of figures of a practical example of the device and how it is used according to the invention.

### Figure 1

Displays from above the fluid-filled mat (1) with the hemispherical bulges at the upper side (2) and the mains system (3) which connects it to the water pipes, the water tap (4), the dosing pump (5), the supply container with the disinfectant or medicine (6) and the pressure reducing valve (7).

### Figure 2

Displays a side view of the fluid-filled mat (1) with the hemispherical bulges at the upper side (2) the cylindrical bulge (8) at the bottom side which together are the chamber (9). Also the upper and lower protective rubber mat which is provided with openings (10) and (11). Inside the chamber (9) is the sprayer (12) with the valve (13) which has been provided with a valve stem (14) that is pressed down by the cow's claw causing the valve (13) to open up and the pressurised fluid to forcibly come out through the sprayer (12) and be sprayed onto the cow's claw.

### Figure 3

Displays a side view of the hemispherical bulge in pressed position (2), whereby the valve stem (14) touches the bottom of the mat causing the fluid to be released from the sprayer (12).

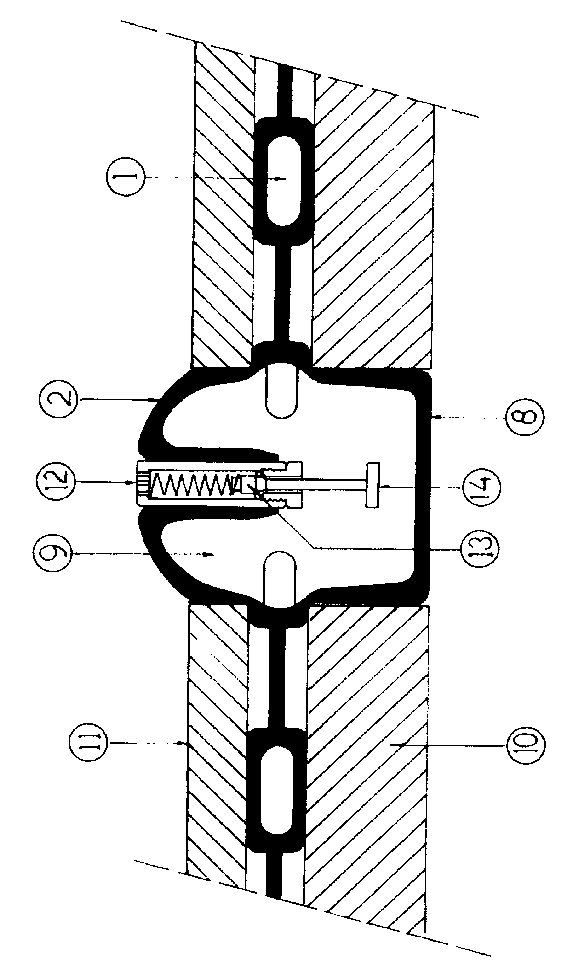

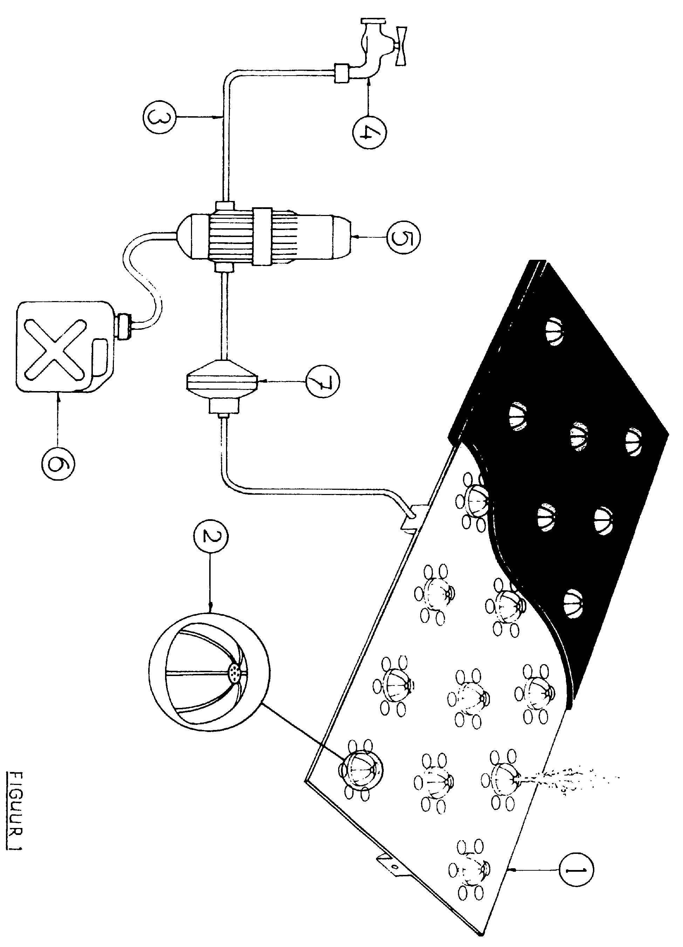

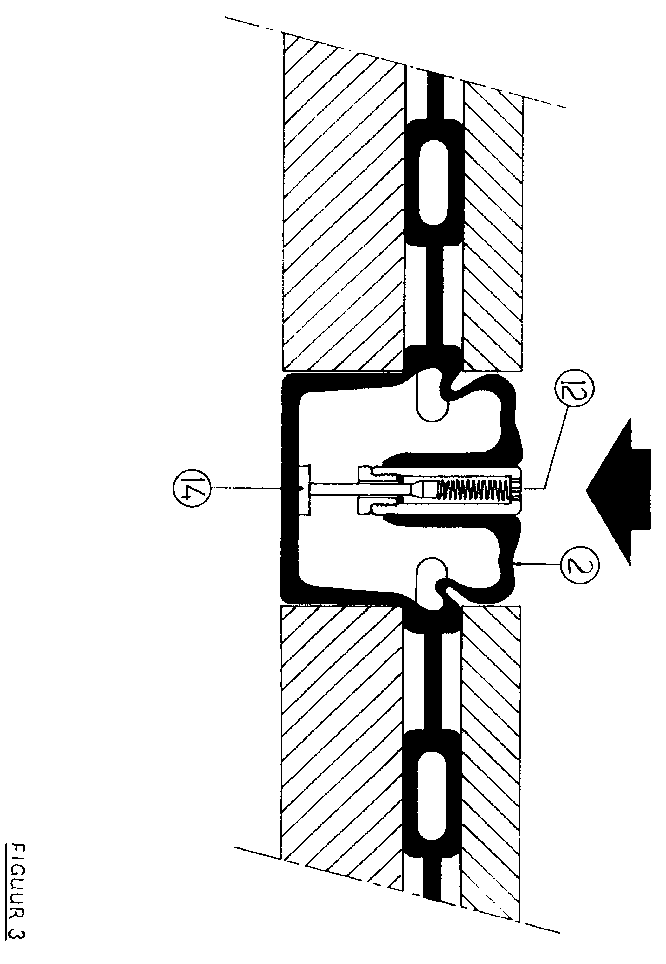

## Claims

1. A device for disinfecting or treating cows' claws fully automatically consisting of a fluid-filled mat (1), made from springy material **with the characteristic** that this mat is connected through a pipe (3) to a water supply system (4) so it can be filled with water, whereby with a dosing pump (5) and from a container (6) a disinfectant or medicine is added to the water and whereby the pipe (3) has been provided with a pressure reducing valve (7) to make sure the mat (1) is continuously filled with the disinfecting solution or medicine at the right pressure and whereby the mat is provided with hemispherical bulges protruding at regular intervals (2) which at the upper side have a valve (13) and sprayer (12) so that whenever a cow steps onto the elastic hemispherical bulge (2), the valve stem (14) at the bottom side of the mat is pushed in, the valve (13) opens up, the sprayer (12) is activated and the claw is sprayed.

2. A device for disinfecting or treating cows' claws fully automatically as in claim 1 **with the characteristic** that at the bottom side of the mat mentioned above (1) underneath the hemispherical bulges (2) there are cylindrical bulges (8) to create chambers (9) and whereby the bottom and upper side of the fluid-filled mat is protected with a rubber or synthetic mat (10) and (11) which has been provided with openings for the hemispherical bulges at the upper side (2) and cylindrical bulges at the bottom side (8), so that the fluid-filled mat is protected and stabilised more effectively.

## Patentansprüche

1. Anlage zur automatischen Desinfizierung oder medizinischen Behandlung von Kuhklauen, bestehend aus einer mit Flüssigkeit gefüllten Matte (1), hergestellt aus einem federnden elastischen Material, **die sich dadurch auszeichnet** dass sie durch Rohr (3) an die Wasserleitung (4) angeschlossen ist und auf diese Weise mit Wasser gefüllt werden kann und mithilfe einer Dosierpumpe (5) aus einem Behälter (6) eine desinfizierende Flüssigkeit oder ein Arzneimittel in das Wasser gegeben wird, wobei das Rohr (3) mit einem Druckreduzierventil (7) ausgestattet ist, sodass die Matte (1) kontinuierlich unter dem richtigen Druck mit der desinfizierenden Flüssigkeit oder dem Arzneimittel gefüllt bleibt und wobei sich auf der Matte in regelmäßigen Abständen voneinander halbkugelförmige Ausbuchtungen (2) befinden, die auf der Oberseite mit einem Ventil (13) und einer Spritze (12) versehen sind, sodass, sobald die elastische halbkugelförmige Ausbuchtung (2) von einer Kuhklaue eingedrückt wird, der Ventilschaft (14) auf den Boden der Matte gedrückt wird, das Ventil (13) sich öffnet, die Düse (12) betätigt und die Klaue besprüht wird.

2. Anlage zur automatischen Desinfizierung oder medizinischen Behandlung von Kuhklauen wie in Schlussfolgerung 1 beschrieben, **die sich dadurch auszeichnet,** dass sich an der Unterkante der oben erwähnten Matte (1) unter den oben erwähnten halbförmigen Ausbuchtungen (2) zylindrische Ausbuchtungen (8) befinden, sodass Kammern (9) gebildet werden und die mit Flüssigkeit gefüllte Matte an der Ober- und Unterseite gleichzeitig von einer Gummi- oder Kunststoffmatte (10) und (11) geschützt wird und die mit Aussparungen für die halbförmigen Ausbuchtungen an der Oberseite (2) und den zylindrischen Ausbuchtungen an der Unterseite (8) versehen ist, sodass die mit Flüssigkeit gefüllte Matte besser geschützt und stabilisiert wird.
Auszug
Anlage für die Desinfizierung oder Behandlung von Kuhklauen, bestehend aus einer mit Flüssigkeit gefüllten Matte, die aus elastischem Material hergestellt wurde, auf der sich in regelmäßigen Abständen halbkugelförmige Ausbuchtungen befinden, jeweils ausgestattet mit einer Düse, die betätigt wird, sobald eine Kuh darauf tritt und die Klaue dann mit der desinfizierenden Flüssigkeit besprüht wird.

## Revendications

1. Installation pour la désinfection automatique ou le traitement par des médicaments des onglons des vaches, qui se compose d'un tapis imbibé de liquide (1), fabriqué dans un matériau élastique résistant comme un ressort avec la caractéristique, que ce tapis est raccordé par un tuyau (3) à le système d'alimentation en eau (4) et peut être rempli d'eau de cette manière, une pompe de dosage (5) peut ajouter au départ du conteneur (6) un liquide désinfectant ou un médicament dans l'eau et le tuyau (3) est doté d'un détendeur (7), de sorte que le tapis (1) soit en permanence rempli du liquide désinfectant ou du médicament à la bonne pression et sur les tapis se trouvent à des distances régulières les uns des autres des protubérances hémisphériques (2) qui sont équipées sur la partie supérieure d'un vaporisateur (12) et une soupape (13) de sorte que quand l'extrusion élastique arrondie est enfoncée par le pied d'une vache, le clapet (14) se trouvant au fonds du tapis soit enfoncé, la soupape (13) s'ouvre, le vaporisateur (12) est mis en activité et le pied est vaporisé.

2. Installation pour la désinfection et le traitement par médicaments automatique de onglons des vache comme décrit dans la conclusion 1, avec la caractéristique qu'en dessous du tapis susmentionné (1) se trouvent sous les protubérances hémisphériques susmentionnées (2) des extrusions cylindriques (8) de sorte que des chambres (9) sont formées et par lesquelles le tapis remplis de liquide est protégé sur le haut et sur le bas par un tapis en caoutchouc ou en synthétique (10) et (11) est équipé d'encoches pour les protubérances hémisphériques sur le haut (1) et les protubérances cylindriques dans le bas (8) de sorte que le tapis rempli de liquide soit mieux protégé et stabilisé.
Extrait
Installation pour la désinfection et le traitement des onglons de vache se composant de
un tapis rempli de liquide fabriqué dans un matériau élastique sur lequel se trouve des protubérances hémisphériques à des distances régulières, dotées d'un vaporisateur qui entre en action dès qu'une vache marche dessus et qui vaporise un liquide désinfectant sur le pied.
